# EUROPEAN PATENT APPLICATION

(11) **EP 2 154 224 A1**
(43) Date of publication of application: **17.02.2010**
(21) Application number: 08252540.3
(22) Date of filing: 25.07.2008
(51) Int. Cl.: C09K 8/36, C09K 8/52, B01F 17/00

(54) **Method of carrying out a wellbore operation**

(71) Applicant: BP EXPLORATION OPERATING COMPANY LIMITED, Sunbury-on-Thames TW16 7BP (GB)
(72) Inventor: The designation of the inventor has not yet been filed
(74) Representative: Collins, Frances Mary

(57) **Abstract**

The invention relates to a wellbore operation, which includes the steps of:
(a) introducing into a wellbore a wellbore fluid in the form of a water-in-oil emulsion comprising a dispersed brine phase and comprising as an emulsifier at least one polymer which contains both hydrophilic units and hydrophobic units, at least some of said hydrophilic units containing sulfonate groups, and less than 50% by weight of said hydrophilic units comprising -CH₂.CH₂.O- units; and at least some of said hydrophobic units containing pendant alkyl groups having at least 8 carbon atoms;
(b) allowing a filter-cake to form; and subsequently
(c) bringing an aqueous-based fluid into contact with the filter-cake, said aqueous-based fluid having a level of salinity which is lower than the level of salinity of said dispersed brine phase in said wellbore fluid. Certain of the wellbore fluids used in the operation are novel.

## Description

This invention relates to a method of carrying out a wellbore operation, for example the construction, repair or treatment of a wellbore, involving the removal of the barrier to fluid flow caused by the filter-cake deposited by the wellbore fluids on or in rock formations penetrated by the wellbore.

Conventionally, the drilling of a well into the earth by rotary drilling techniques involves the circulation of a drilling fluid from the surface of the earth down a drill string having a drill bit on the lower end thereof and through ports provided in the drill bit to the well bottom and thence back to the surface through the annulus formed about the drill string. The drilling fluid serves to cool the drill bit, to transport drill cuttings to the surface, and to stabilize the wellbore.

Wellbore fluid compositions are flowable systems that are generally thickened to a limited extent. Known wellbore fluids can be assigned to one of the following classes: wellbore fluids based on oil (referred to herein as "oil-based muds", "OBM"s), that is, systems which are water-in-oil emulsions, often known as "invert emulsions", in which the aqueous phase (generally a brine) is distributed as a heterogeneous fine dispersion in the continuous oil phase; purely aqueous based wellbore fluids; and aqueous based wellbore fluids of the oil-in-water emulsion type. The present invention relates to oil-based systems having a brine phase dispersed in the continuous oil phase. Such OBMs also contain additional ingredients, for example water-in-oil emulsifiers, dispersed solid particles such as barite and calcium carbonate, and oil-wetting agents to maintain such particles in an oil-wet condition.

OBM's, unlike other types of oil-in-water emulsion (such as liquid explosives, cosmetic creams, foodstuffs, liquid fuels, etc.), are required to exhibit filtration control, i.e. control over the loss of filtrate from the wellbore into the rock formation. In an OBM the filtration control is partly obtained from the very stable emulsion droplets that have a tough emulsifier "skin" to prevent their coalescence when concentrated together in a filter cake at high differential pressure and temperature. Over the years the wellbore fluid industry has developed and refined emulsifiers and combinations of emulsifiers that provide this tough emulsifier skin. Such emulsifiers also contribute to filtration control by forming robust inverse micelles in the oil phase, the inverse micelles having a hydrophilic core and a lipophilic shell. These micelles are much smaller than the emulsion droplets, and are stable enough to accumulate in the micropores in the filter-cake further restricting the flow of filtrate.

The emulsifiers used in water-in-oil emulsions in other industries are typified by fatty acid esters such as sorbitan monolaurate and sorbitan trioleate. Although water-in-oil emulsions resistant to separation can be formed using such surfactants, they are not effective in reducing filtration.

Filtration is further reduced in OBMs by the addition certain oil-soluble polymers such as vinyltoluene / alkylacrylate copolymers, or organic colloid-forming materials such as blown asphalt, gilsonite, and alkylamine treated lignite.

Wellbore fluids often contain polymers performing various functions. For example, WO 2008/001049 discloses that significant improvement in fluid loss (i.e. reduced leakage of filtrate from the wellbore into the rock formation) can be obtained in aqueous based wellbore fluids by the use of a particular type of polymer in which the structure of the polymer has a particular combination of features, including the presence of sulfonate groups. WO 00/22009 further describes the use of such polymers as emulsion stabilisers in water-continuous emulsion polymerisation.

GB 2,309,240 discloses an OBM which contains a mixture of specific low molecular weight emulsifiers. In use, these emulsifiers stabilise the OBM, and drill cuttings resulting from drilling a well become coated with the stable water-in-oil emulsion. Treating the cuttings with a low salinity water causes the emulsion to break, facilitating clean-up of the cuttings.

US 6,822,039 discloses the use in wellbore fluids of certain polymers obtained by grafting n-alkylamines or di-n-alkylamines on to a hydrophilic polymer backbone. The stable water-in-oil emulsion obtained using these polymers can be destabilized or reversed to form an oil-in-water emulsion by adding fresh water, enabling the oil phase to be recovered for recycling, and drilling debris to be cleaned.

When drilling a permeable rock formation such as a hydrocarbon producing formation or an interval intended for water injection (e.g. seawater injection), the hydrostatic pressure in the well is maintained higher than the natural pressure of fluids inside the permeable rock in order to prevent a flow of formation fluids into the well. This differential pressure causes filtration of the drilling fluid such that a substantially all-oil filtrate is forced into the permeable rock. For this reason, OBMs frequently contain dissolved or colloidally-dispersed polymers or resins such as gilsonite, blown asphalt, vinyl toluene/alkyl acrylate copolymers or amine-treated lignite, which act to reduce the filtration rate of the wellbore fluid (i.e. to reduce the fluid loss into the formation). Dispersed particles such as oil-wet barite are generally too large to enter the pores of the formation, and so they are deposited on the wellbore wall as a filter-cake.

The oil-wet particles pack together in the filter-cake under the applied differential pressure. Also, the strongly emulsified brine emulsion droplets become trapped in the pores between the solid particles. Because the brine is a non-wetting phase the droplets cannot be readily forced through the pore throats, causing the permeability of the filter-cake to be very low. The filter-cake permeability is yet further reduced by the accumulation of dissolved or colloidally-dispersed polymers or resins sealing the pore passages. This very low permeability filter-cake is useful during drilling because it limits loss of filtrate to the formation, and avoids problems such as differential sticking of the drillstring.

Unfortunately the low permeability filter-cake can later form a barrier to the production of hydrocarbons or the injection of seawater, especially if it becomes trapped between the formation and the expanded screens or gravel packs that are commonly used to limit sand invasion into the wellbore. The problem is particularly acute in the case of seawater injection for two reasons. First, the injected water pressure forces the filter-cake onto the rock surface which can consolidate the seal (as opposed to a production well where filter-cake can often be lifted off the rock surface by the pressure of the fluids being produced). Secondly conventional OBM filter-cakes are persistently oil-wet which makes the penetration of seawater into and through the filter-cake very difficult.

Accordingly the industry has employed filter-cake treatment fluids pumped down the well in attempts to reverse the wettability and break the emulsion in the filter-cake. Such "breaker" fluids can contain surfactants, co-solvents, micro-emulsions and acids aimed at opening up the permeability of the filter-cake. Attempts to provide breakable OBM filter-cakes have been made, for example US 6,790,811 describes the use of emulsifiers which can be protonated under acidic conditions. This is designed to make the filter-cake susceptible to acidic treatment fluids pumped into the well, reversing the emulsion and water-wetting the solids in the filter-cake, rendering it permeable.

Unfortunately such treatments are frequently inefficient. The very low permeability of OBM filter-cakes impedes the penetration of the breaker fluid. Often long "soak times" are required. Another problem is that if a portion of the filter-cake is quickly broken, the breaker fluid may then flow into the rock formation leaving the rest of the filter-cake untreated.

There is thus a need for OBMs which initially form low permeability filter-cakes, but where the permeability of the filter-cake spontaneously increases when the well is put onto production or water injection.

Accordingly, the present invention provides a method of carrying out a wellbore operation, which includes the steps of:
(a) introducing into a wellbore a wellbore fluid in the form of a water-in-oil emulsion comprising a dispersed brine phase and comprising as an emulsifier at least one polymer which contains both hydrophilic units and hydrophobic units, at least some of said hydrophilic units containing sulfonate groups, and less than 50% by weight of said hydrophilic units comprising -CH₂.CH₂.O- units; and at least some of said hydrophobic units containing pendant alkyl groups having at least 8 carbon atoms;
(b) allowing a filter-cake to form; and subsequently
(c) bringing an aqueous-based fluid into contact with the filter-cake, said aqueous-based fluid having a level of salinity which is lower than the level of salinity of said dispersed brine phase in said wellbore fluid.

The OBM used in step (a) of the process of the invention comprises a water-in-oil emulsion stabilised by the defined polymer. The defined polymer contains sulfonate groups which can exist in either un-ionised ion pair form (SO₃M where M is a metal, hydrogen or ammonium cation) or ionised (SO₃⁻) form. The degree of ionisation of these groups depends upon the concentration of dissolved salts in the dispersed brine phase of the OBM. When the salt concentration is relatively high, the proportion of ionised groups will be relatively low, and the polymer will act as an effective emulsifier for a water-in-oil emulsion. When the salt concentration is relatively low, the proportion of ionised groups will be relatively high, and the polymer will become a less effective water-in-oil emulsifier. Under these conditions, either no emulsion will form, or an oil-in-water emulsion may form. The method of the present invention exploits this effect by utilising a stable water-in-oil emulsion having a relatively high salt content in the dispersed brine phase in step (a) of the process, and then, in step (c) of the process, destabilising the emulsion or causing it to reverse to an oil-in-water emulsion, by introducing water having a much lower dissolved salt content. The difference in salt content in the two steps will of course need to be sufficient for the desired effect to be obtained, and the exact difference will depend upon the precise nature of the polymer and the anions and cations in the brine phase.

The method of the present invention may be used as part of a number of different wellbore operations. In one preferred method, a well is drilled using an oil-based drilling fluid as specified in step (a); once drilling is completed and a filter-cake has formed, the drilling fluid is displaced by a completion fluid having at least a similar level of salinity to that of the dispersed brine phase of the drilling fluid in order that the filter-cake seal is not broken; finishing hardware, for example well liners to stabilise the formation, is installed; and finally relatively low salinity aqueous-based fluid, for example seawater, is brought into contact with the filter-cake. Such a process is particularly useful in a seawater injection well, but may also be used in a production well. Contact with the relatively low salinity fluid will generally, by a process of osmosis and/or permeation, cause the filter-cake to swell, and cause the salinity of the brine droplets in the pores to decrease. This causes the water-in-oil emulsion to become unstable, and either to break or to reverse to form an oil-in-water emulsion. This allows aqueous fluid to flow through the pore network between the particles forming the filter-cake, facilitating communication between the wellbore and the reservoir.

The relatively low salinity fluid which is used in step (c) of the process of the invention may be fresh water or an aqueous brine, or an oil-in-water emulsion. It may for example be injected water (e.g. injected seawater) or produced water. For example, in gas-producing wells, as the gas traverses the formation towards the wellbore, the gas will expand at the reduced pressure near the wellbore causing adiabatic cooling and the condensation of low salinity water from the water-saturated gas phase. This can be used to advantage in the process of the invention. Alternatively a relatively low salinity clean-up fluid, optionally containing additives designed to assist clean-up, may be pumped into the well.

Although many conventional emulsifiers used in OBMs are small (non-polymeric) molecules, for example as described in GB 2,309,240, many polymers used as additives in wellbore fluids in the prior art have very high molecular weights, often specifically designed to increase the viscosity of the fluid, or even to produce a gel. In contrast, the polymers used in the present invention preferably have a relatively low molecular weight, for example a number average molecular weight in the range of from 2,000 to 100,000, preferably less than 90,000, especially less than 80,000. The minimum molecular weight is preferably 5,000, and the preferred molecular weight is at least 10,000, for example from 10,000 to 80,000.

Viscosity of a system containing a polymer is generally a function of molecular weight, low molecular weight materials generally leading to a correspondingly low viscosity. The polymers used in the present invention are expressly intended to provide a relatively low viscosity.

The polymers used in the fluids of the invention contain hydrophilic units to ensure sufficient amphiphilic character for emulsion stabilisation. Polymers having hydrophilic groups based upon ethylene oxide contain -CH₂.CH₂.O- units and have undesirable properties in that they become insufficiently amphiphilic under the conditions of high temperature and high salinity frequently experienced by wellbore fluids. The ether oxygen atoms are hydrophilic and solvated by water at (say) room temperature, but they dehydrate at about 100°C, causing phase separation of the polymer. Another example is discussed by Wu et al, J. Phys.: Condens. Matter 18 (2006) 4461-4471, which shows that high temperatures cause phase separation of the polymer, the effect being exacerbated by the addition of salt. Polymers that substantially rely on -CH₂.CH₂.O- units as hydrophilic moieties are thus unsuitable for this invention. The polymers used in the present invention are **characterised in that** less than 50% by weight, preferably less than 10% by weight, and preferably none of said hydrophilic units comprise -CH₂.CH₂.O- units.

Preferably the polymer is at least 2% soluble in water at 20°C, the solubility being of course influenced by the proportion of hydrophilic units it contains.

A key feature of the polymers used in the present invention is that they should contain pendant alkyl groups having at least 8, preferably at least 10, preferably at least 12, especially at least 16, carbon atoms in the pendant alkyl chain. These alkyl groups provide hydrophobic elements in the polymer. Preferably they are present in an amount such that the combined molecular weight of said pendant alkyl groups is in the range of from 15 to 70%, preferably from 30 to 70%, by weight based on the weight of the polymer.

Preferably, at least some of the pendant alkyl groups, preferably all of such groups, are attached to carbon atoms of the polymer backbone via a link selected from a carbon-carbon bond; a carbon-oxygen-carbon ether bond (including those forming an acetal or hemiacetal group); or a carbon-oxygen-carbon ester link (including those forming carbamate and urethane groups). Thus for example, ester links may be formed between a hydroxyl group on the backbone and a fatty acid, or between a carboxylic acid pendent on the backbone and a fatty alcohol. Similarly a carbamic acid group can be located on the backbone or on the alkyl group and can be reacted with a hydroxyl group on the alkyl group or the backbone respectively; isocyanate groups may form urethane links with hydroxyl groups; and aldehyde groups react with an alcohol to form first a hemiacetal and subsequently an acetal (by condensing with an additional molecule of alcohol). An ether link may be introduced by condensing a long-chain alcohol with a hydroxyl group on the backbone. OBMs suitable for use in step (a) of the process of the invention containing such polymers are especially effective and are novel. Accordingly the present invention provides such OBMs *per se*. Such polymers are distinct from the polymers of US 6,822,039, in which pendent alkyl groups are introduced by grafting to form an amide link.

Hereinafter, with reference to the polymers used in the present invention, a monomer which provides a hydrophilic unit or a functional group that is convertible into a hydrophilic grouping is referred to as a "hydrophilic monomer", and a monomer which provides a pendant alkyl group or a functional group which is convertible into a pendant alkyl group is referred to as a "hydrophobic monomer". Naturally, some monomers may have both hydrophilic and hydrophobic character.

The polymer used in the present invention may have a linear polymeric backbone or a branched polymeric backbone. Preferably, the polymeric backbone is either not crosslinked or has a low degree of crosslinking.

The polymer may be derived from a homopolymer wherein the structural units of the homopolymer are provided by a monomer having one or more hydrophilic units and one or more hydrophobic units containing a pendant alkyl group (or having functional groups that are convertible into a hydrophilic unit and/or a hydrophobic unit containing a pendant alkyl group), or from a hydrophilic monomer onto which pendant alkyl groups are subsequently grafted. For example, the polymer may be a homopolymer of a higher alcohol mono-ester of maleic acid of general formula HO(O)CCH=CHC(O)OR where R is a C₈ to C₄₀ alkyl group, preferably a C₁₀ to C₄₀ alkyl group, more preferably a C₁₂ to C₃₀ alkyl group, for example, mono-lauryl maleate, into which sulfonate groups have been introduced.

The polymer may also be a copolymer, for example a random copolymer, an alternating copolymer, or a block copolymer, comprising at least one hydrophilic monomer, at least some sulfonate groups, and at least one hydrophobic monomer. Examples of hydrophilic monomers include acrylic acid, methacrylic acid, hydroxyethylmethacrylate, hydroxypropylmethacrylate, maleic acid, maleic anhydride, fumaric acid, itaconic acid, acrylamide, N,N-dimethylacrylamide, N-vinyl pyrrolidone, 2-acrylamido-2-methylpropane sulfonic acid (AMPS), vinylsulfonic acid, and styrenesulfonic acid. Alkali metal, ammonium or amine salts of the acidic monomers may also be employed. Additional suitable sulfonated monomers include sodium allyl sulfonate and sodium methallyl sulfonate, 2-acrylamidoethane sulfonic acid, 2-acrylamidopropane sulfonic acid, 3-methacrylamidopropane sulfonic acid, and vinylbenzyl sulfonic acid.

The polymer must contain sulfonate groups. These may either be present in one of the monomers from which the polymer is made, or introduced after polymerisation, for example by starting from a hydrophilic unit comprising a carboxylic acid or anhydride group, and reacting at least a portion of the carboxylic acid or anhydride groups with a compound of general formula R¹₂N(CH₂)ₙSO₃X (I) or a compound of general formula HO(CH₂)ₙSO₃X (II) wherein each R¹ is independently selected from hydrogen, methyl or ethyl, X is either H, ammonium, or a Group IA metal, such as lithium, sodium, potassium, rubidium or cesium, and n is an integer of from 1 to 6, preferably 1 to 3. Preferred reactive compounds of these types include taurine, N-methyl taurine, isethionic acid or their salts.

Preferably the ratio by weight of sulfonate groups, calculated as sulfonate ions SO₃⁻, to pendant alkyl groups is at least 5:95, more preferably at least 10:90, especially at least 20:80. Preferably it is not greater than 50:50.

The presence of sulfonate groups increases the hydrophilicity of the polymer. This confers improved utility of the polymer as a water -in-oil emulsifier for high ionic concentration brine-in-oil emulsions. The sulfonate groups on the polymer also provide improved emulsion stability where the water contains calcium or magnesium salts or other polyvalent cations. Alternative methods of introducing sulfonate groups onto preformed polymers include sulfoethylation via the Michael reaction of vinylsulfonic acid with any hydroxyl or amino groups present on the polymer, or sulfomethylation via the reaction of formaldehyde and a sulfite salt with amino groups or phenolic rings that may be present in the polymer. Direct sulfonation of, for example, aromatic or unsaturated groups can be achieved by reacting sulfur trioxide, an acyl sulfate such as acetyl sulfate, or chlorosulfonic acid, with the polymer.

An example of a monomer having a functional group that is convertible into a sulfonate group is maleic anhydride. The anhydride functional group may be reacted with a compound of general formula (I) to generate sulfonated monoamide or diamide derivatives thereof or with a compound of general formula (II) to generate sulfonated monoester or diester derivatives thereof. Further, hydrophobic monomers such as styrene may be converted into hydrophilic units by the introduction of sulfonic acid groups.

It is envisaged that a portion of the carboxylic acid groups of a carboxylated vinylic polymer (for example, acrylic acid, methacrylic acid, maleic acid, fumaric acid, or itaconic acid) may be converted into groups containing pendant alkyl groups. Thus, straight chain or branched chain alkyl groups having for example from 8 to 40 carbon atoms, preferably 12 to 30 carbon atoms, may be grafted onto the carboxylic acid groups of such polymers via an amide or, especially, an ester linkage. For example, an alcohol (R³OH) can be reacted with the carboxylic acid groups of a polyacrylic acid to generate -C(O)OR³ pendant groups (where R³ is a C₈ to C₄₀ straight chain or branched chain alkyl group). Similarly, an N-alkyl amine (R⁴NH₂) or an N,N-dialkylamine (R⁴₂NH) can be reacted with the carboxylic groups of a polyacrylic acid to form an amide linkage (where R⁴ is a C₈ to C₄₀ straight chain or branched chain alkyl group).

Examples of hydrophobic monomers include: C₁₀ to C₄₀, preferably C₁₂ to C₃₀, alpha-olefins; alkyl vinyl ethers such as C₈ to C₂₄ alkyl vinyl ethers, for example C₁₀ to C₂₄ alkyl vinyl ethers, preferably C₁₂ to C₁₈ alkyl vinyl ethers; acrylates of the general formula CH₂=CHR⁷C(O)OR⁸ (IV) where R⁷ is H or methyl and R⁸ is a C₈ to C₄₀ alkyl group, for example a C₁₀ to C₄₀ alkyl group, preferably a C₁₂ to C₃₀ alkyl group; and acrylamides of the general formula CH₂=CHR⁵C(O)NHR⁶ (III) where R⁵ is selected from the group consisting of H and C₁ to C₄ alkyl groups, preferably, methyl or ethyl, and R⁶ is a C₈ to C₄₀ alkyl group, for example a C₁₀ to C₄₀ alkyl group, preferably a C₁₂ to C₃₀ alkyl group.

The polymer may comprise a copolymer of one or more hydrophobic monomers with one or more hydrophilic monomers. For example, alkyl vinyl ethers may be readily copolymerised with maleic anhydride. The hydrophobic alkyl groups introduced into the copolymer using an effective mole fraction of alkyl vinyl ether comonomer confer useful properties to the maleic anhydride copolymers. However, if necessary, a portion of the anhydride groups in the resulting copolymer may be readily grafted with an alkanol or alkylamine having an alkyl group containing at least 8, for example at least 10 carbon atoms, preferably 12 to 30 carbon atoms, thereby introducing further alkyl groups into the polymer. Sulfonate groups are then introduced, preferably by the addition of an amino sulfonic acid or a hydroxysulfonic acid to the anhydride group as described above. Further hydrophilic units may then be introduced by hydrolysis and ring-opening of the remaining anhydride groups thereby generating dicarboxylic acid functional groups. Preferably the sulfonate groups and the remaining carboxylic acid groups are neutralised to give the corresponding alkali metal, ammonium, or amine salts.

It is also known that hydrophilic monomers such as unsaturated anhydrides (for example, maleic anhydride) and/or unsaturated carboxylic acids (for example, acrylic acid, methacrylic acid, maleic acid, fumaric acid, or itaconic acid) may be copolymerised with at least one alpha-olefin. Suitable alpha-olefins preferably have at least 10, for example at least 12, preferably at least 14, carbon atoms, and preferably have up to 30, for example up to 24, for example up to 18, carbon atoms. For example a C₁₀ to C₃₀ alpha-olefin, for example a C₁₂ to C₃₀ alpha-olefin, for example a C₁₂ to C₁₈ alpha-olefin, may be used to produce a polymer having pendant alkyl groups. However, lower alkyl ester derivatives of the unsaturated carboxylic acid (for example, methyl or ethyl ester derivatives) are more readily copolymerisable with the alpha-olefin. Accordingly, it is preferred to copolymerize the lower alkyl ester derivatives of unsaturated carboxylic acids with the alpha-olefin with subsequent hydrolysis of the ester linkage yielding the hydrophilic carboxylate groups. Unsaturated anhydrides such as maleic anhydride may be employed as monomers without esterification. For example, 1-dodecene and 1-octadecene are copolymerisable with maleic anhydride to produce a polymer having pendant alkyl groups. As described above, at least some sulfonate groups are then introduced into the polymer, preferably by reacting the anhydride groups with a compound of general formula (I) or (II). If desired, other hydrophilic groups can be introduced, for example by hydrolysis and ring-opening of the anhydride groups thereby generating dicarboxylic acid groups or, preferably, alkali metal, ammonium, or amine salts of the dicarboxylic acid groups. Particularly preferred polymers of this class include sulfonated derivatives of copolymers, for example alternating copolymers, of maleic anhydride and a C₁₀ to C₃₀, for example a C₁₂ to C₃₀, alpha-olefin. Commercially available mixtures of C₁₀ to C₃₀ alpha-olefins, for example a C₁₆-C₁₈-C₂₀ mixture, may for example be used to prepare such polymers. Typical precursor polymers include poly(maleic anhydride-*alt*-1-dodecene); poly(maleic anhydride-*alt*-1-tetradecene); poly(maleic anhydride-*alt*-hexadecene); poly(maleic anhydride-*alt*-octadecene); poly(maleic anhydride-*alt*-1-eicosene); poly(maleic anhydride-*alt*-1-docosene) and poly(maleic anhydride-*alt*-α-olefin, C₂₄-C₂₈). The corresponding random or block copolymers may also be mentioned. In such copolymers, the molar ratio of alpha olefin to maleic anhydride is preferably in the range of from 30:70 to 70:30.

Particularly suitable precursor materials include:
1. Poly(maleic anhydride-*alt*-1-tetradecene) as supplied by Aldrich (average molecular weight 9,000);
2. Poly(maleic anhydride-*alt*-1-octadecene); sold by Chevron Phillips Chemical Company as "PA-18 Polyanhydride Resin" (average molecular weights of about 20,000 (LV version) and 50,000 (HV version);
3. Poly(maleic anhydride-*alt*-α-olefin, C24-C28); average molecular weight 6,400, as supplied by Aldrich.

Precursor copolymers may be produced from hydrophilic monomers such as unsaturated anhydrides (for example maleic anhydride) and/or unsaturated carboxylic acids (for example, acrylic acid, methacrylic acid, maleic acid, fumaric acid, and itaconic acid) copolymerised with at least one acrylamide monomer of general formula (III) and/or acrylate ester monomer of general formulae (IV). Preferred acrylamide monomers include N-dodecyl acrylamide, N-dodecyl methacrylamide, N-hexadecyl acrylamide, N-hexadecyl methacrylamide, N-octadecyl acrylamide and N-octadecyl methacrylamide. Preferred acrylate ester monomers include dodecylmethacrylate, hexadecyl methacrylate and octadecyl methacrylate. At least some pendant sulfonate groups are introduced into the polymer, preferably by reacting the anhydride or carboxylic acid groups with a compound of general formula (I) or (II). Further hydrophilic groups may then be introduced into anhydride-containing polymers by hydrolysis and ring-opening of the remaining anhydride groups thereby generating dicarboxylic acid groups or, preferably, alkali metal, ammonium, or amine salts of the dicarboxylic acid groups. Sulfonated derivatives of alpha olefin/maleic anhydride copolymers such as PA-18 display excellent water-in-oil emulsion stabilisation in oil-based wellbore fluid formulations that comprise a high salinity brine phase containing at least 15% by weight dissolved salts, and also display rapid and smooth inversion to an oil-in-water emulsion when, for example, 1 part by volume of the wellbore fluid is mixed with at least 4 parts, preferably about 9 parts, of lower salinity water such as fresh water or seawater.

The polymer may be an amphiphilic block copolymer having at least one polymeric block having structural units derived from a hydrophobic monomer containing pendant C₈₊ alkyl, especially C₁₀₊ alkyl, groups and at least one polymeric block having structural units derived from a hydrophilic monomer. The block copolymer may be a di-, tri-, or multiblock copolymer. Typically, the block copolymer is an AB block copolymer, an ABA block copolymer or an ABC block copolymer. Where the polymer is an ABA block copolymer the A blocks may be hydrophobic and the B block hydrophilic or the A blocks may be hydrophilic and the B block hydrophobic. Where the hydrophilic monomer does not contain a sulfonate group, at least some sulfonate groups are introduced by post-reacting the precursor polymer.

The number of pendant alkyl groups incorporated into the polymer is chosen so that the polymer is not overly hydrophobic. Suitably, the hydrophile-lipophile balance (HLB) value of the polymer is at least 7, preferably at least 8, and most preferably at least 10 (HLB is a well-known scale that characterizes emulsifiers in terms of their tendency to form oil in water or water in oil emulsion).

The concentration of the polymer in the wellbore fluid according to the invention is not critical, and may for example be from 0.1 to 20% by weight based on the combined oil and aqueous phases, in the absence of any weighting agents or other constituents of the fluid. Preferably however, for economic reasons, a relatively low content of polymer is used. For example, the content of polymer may be for example from 0.1 to 8 percent by weight, preferably 0.5 to 6 percent by weight.

If desired, two or more of the defined polymers may be present.

The polymer used in the invention, having both hydrophilic and hydrophobic units, acts as an emulsifier. Additional emulsifier, for example those conventionally used in an OBM, may also be present if desired. Suitable conventional emulsifiers would be well known to the person skilled in the art. For example, conventional emulsifiers used in OBMs include tall oil fatty acid (TOFA, mostly C₁₈ unsaturated fatty acids) neutralized with lime, alkyl amidoamines and imidazolines made by the condensation of TOFA with a polyethyleneamine, maleic anhydride adducts of alkyl amidoamines and imidazolines made by the condensation of TOFA with a polyethyleneamine, and oligomerised fatty acids such as "dimer acid" and "trimer acid" produced by the clay-catalysed thermal condensation of TOFA C₁₈ fatty acids

Especially preferred co-emulsifiers are the block or graft copolymer emulsifiers such as are described in US 4,776,966. A typical example of these is the ester condensation product of one mole polyethylene glycol of molecular weight about 1500 and two moles of poly(12-hydroxystearic acid) terminated with stearic acid having a molecular weight of about 1750, i.e. an ABA block copolymer. Used in conjunction with non-ionic polymeric emulsifiers such as this, the sulfonated polymers of the current invention act as a hydrotrope for the non-ionic polymers, improving their performance in high salinity water-in-oil emulsions.

Typically, the wellbore fluid is a drilling fluid, completion fluid, workover fluid or packer fluid, preferably a drilling fluid.

The continuous oil phase in a wellbore fluid of the invention can be any of the known base oils used or proposed for use in oil-based muds. These include crude oil; hydrocarbon fractions refined from crude oil such as diesel fuel or mineral oil; synthetic hydrocarbons such as n-paraffins, alpha-olefins, internal olefins, and poly-alphaolefins; synthetic liquids such as non-polar dialkyl ethers, alkyl alkanoate esters, and acetals; natural oils such as triglycerides including rape-seed oil and sunflower oil; or any mixture of these. Low toxicity and highly biodegradable oils are generally preferred.

Suitable esters include esters of unsaturated fatty acids and saturated fatty acids as disclosed in EP 0374671A and EP 0374672 respectively; esters of neo-acids as described in WO 93/23491; oleophilic carbonic acid diesters having a solubility of at most 1% by weight in water (as disclosed in US 5,461,028); triglyceride ester oils such as rapeseed oil (see US 4,631,136 and WO 95/26386). Suitable acetals are described in WO 93/16145. Suitable synthetic hydrocarbons include polyalphaolefins (see, for example, EP 0325466A, EP 0449257A, WO 94/16030 and WO 95/09215); linear alpha-olefins as disclosed in US 5,627,143; isomerized linear olefins (see EP 0627481A, US 5,627,143, US 5,432,152 and WO 95/21225); n-paraffins, in particular n-alkanes (see, for example, US 4,508,628 and US 5,846,913); linear alkyl benzenes and alkylated cycloalkyl fluids (see GB 2,258,258 and GB 2,287,049 respectively). Suitable ethers include those described in EP 0391251A (ether-based fluids) and US 5,990,050 (partially water-soluble glycol ethers). Suitable alcohols include oleophilic alcohol-based fluids as disclosed in EP 0391252A.

In the OBM, the brine phase is for example dispersed in the continuous oil phase in an amount of from 1 to 70% by volume, preferably 10 to 70% by volume, most preferably 20 to 70 % by volume based on the total volume of the aqueous and oil phases. Generally, the brine phase is distributed in the aqueous phase in the form of finely divided droplets.

The dispersed brine phase may for example be a synthetic brine containing one or more salts. Suitable salts include alkali metal halides, alkali metal carbonates, alkali metal sulphates, alkali metal formates, alkali metal phosphates, alkali metal silicates, alkaline earth metal halides, and zinc halides. The salt may be present in the aqueous solution at concentrations up to saturation. Preferably, the salt in the brine phase is present at a concentration in the range of at least 15% by weight, for example 15 to 40% or more by weight (the upper limit being determined only by the solubility of the relevant salt(s), preferably at least 25% by weight, for example at least 30% by weight, based on the total weight of the brine. OBMs suitable for use in step (a) of the process of the invention in which the dispersed brine phase contains at least 25% by weight, preferably at least 30% by weight of dissolved salts, based on the total weight of the brine, are especially effective and are novel. Accordingly the present invention provides such OBMs *per se*.

The wellbore fluid may further contain any known oil-based wellbore fluid additives such as wetting agents; deflocculants; clays; organoclay or polymeric viscosifiers; filtration reducers such as lignite derivatives, asphalts, asphaltites such as gilsonite or polymers dissolved or colloidally dispersed in the oil; weighting agents such as finely divided barium sulfate (barite), calcium carbonate (calcite), the mixed carbonate of calcium and magnesium (dolomite), hematite, haussmanite, and mixtures thereof; lubricating additives; temporary bridging particles such as calcium carbonate, sparingly water-soluble / oil-insoluble solids such as melamine or lithium carbonate, suspended salt particles, or huntite (a mixed carbonate of magnesium and calcium; or any other functional additive known to those skilled in the art.

The quantity of auxiliary substances and additives used in each case lie within the usual boundaries for a drilling fluid.

Preferably, a bridging particulate material is added to a wellbore fluid of the present invention. Bridging agents are composed of solid particles whose particle size is such that they will not appreciably intrude into a porous and permeable rock formation such as sandstone. On the wellbore wall there are exposed entrances to pores or fissures in which the bridging particles "log-jam" and start to build a filter-cake. The permeability of the rock matrix or fissures is thus protected from plugging by invaded materials.

Suitably, the bridging particulate material is sized so as not to enter the pores or fissures of any permeable rock through which the wellbore passes. Typically, the bridging material has an average particle diameter in the range 15 to 2000 microns. The size chosen depends upon the particular operation in which the wellbore fluid is being employed and the size of the pores, fractures or other conduits in the rock formation. Preferably, the bridging material has a broad (polydisperse) particle size distribution.

Typical bridging particulate material comprises at least one substantially crush resistant particulate solid, for example calcium carbonate. However, because this invention concerns filter-cakes that are removed or made permeable by the application of relatively low salinity water, it is preferred that the bridging particles have at least some water-solubility. The use in oil-based drilling and completion fluids of suspended salt particles such as sodium chloride is known. In contrast to conventional OBM fluids containing salt particles, the facile initiation of the flow of low salinity water through filter-cakes from the OBM of this invention can provide an improvement in the rate and degree of salt particle removal by low salinity water, and therefore provides a preferred embodiment of the invention.

Further, this invention is also well-suited to be applied in conjunction with sparingly water-soluble bridging solids such as are described in WO 2007/088322. The sparingly soluble bridging solids are particles of melamine, lithium carbonate, magnesium sulfite or lithium phosphate. They have the advantage over suspended sodium chloride fluids that they are less prone to suffer premature failure of the filter-cake and losses of the wellbore fluid to the formation. This therefore provides a preferred embodiment of the invention.

Similarly, for acid-soluble bridging particles such as calcium carbonate, the increase in permeability of a filter-cake in the relatively low salinity fluid (e.g. seawater) increases the effectiveness of a subsequent clean-up with an acid solution. The sparingly soluble bridging agents of WO 2007/088322 are also readily soluble in mild acid solutions.

The lower salinity aqueous-based fluid used in step (c) of the process of the invention is suitably fresh water or brackish water or a relatively low salinity brine, including seawater. In many applications, it is preferably seawater. It must be sufficiently low in salt content to cause destabilisation of the OBM. Preferably, the content of salts in the lower salinity fluid is at least 4% by weight lower in dissolved salt content than the dispersed brine phase OBM. The lower salinity fluid preferably contains less than 6%, preferably less than 4%, by weight of dissolved salts.

The concentration of salt(s) in the dispersed brine phase of the OBM may be at least twice, preferably at least four times, the concentration of salts in the relatively low salinity aqueous-based fluid used in step (c). Thus, in the case of a water injection well where the relatively low salinity aqueous-based fluid is injected seawater (typically containing about 3.5% by weight dissolved salts) which assumes the role of a clean-up fluid, the dispersed brine phase of the wellbore fluid may for example contain at least 15% by weight total dissolved salts.

Suitable choice of salts allows a broad range of specific gravity and salt concentration. Some examples are shown in the following Table. The concentrations and specific gravities are approximate and refer to ambient temperature.

| SALT | %w/w at saturation | specific gravity of saturated solution |
|---|---|---|
| KCl | 24 | 1.16 |
| NaCl | 26 | 1.20 |
| CaCl₂ | 40 | 1.40 |
| NaBr | 48 | 1.53 |
| potassium carbonate | 50 | 1.54 |
| potassium formate | 75 | 1.57 |
| caesium formate | 83 | 2.3 |

Generally salts having monovalent cations are preferred because a polymer with a lower degree of sulfonation can be used effectively, and the emulsion breaking or inversion by lower salinity water is more efficient.

The following Examples illustrate the invention.

The following US to metric unit conversion factors were used in the Examples:
1 US gallon (gal) = 3.785 litres
1 lb = 0.454 kg
1 lb/gal (ppg) = 0. 1198 g/cm3
1 barrel (bbl) = 42 gal
1 lb /bbl (ppb) = 2.835kg/m3
1 lb/100ft² = 0.4788 Pascal (Pa)
1 lb/sq.in. (psi) = 6.895 x 10³ Pa

The oil-based emulsion fluid formulations were tested for their viscous properties, their filtration at high temperature and high pressure (HTHP Fluid Loss), and their electrical stability (ES, emulsion breakdown voltage) in accordance with the specifications of the American Petroleum Institute (API) guidelines "Recommended Practice for Field Testing of Oil-Based Drilling Fluids", API RP 13B-2, Fourth Edition 2005. The HTHP Fluid Loss test employs a pressurized cell fitted with a standard hardened filter paper as a filtration medium. The filtration area is 7.1 square inches (0.0045 m²) or may be smaller. If smaller, the result reported is corrected to a filter area of 7.1 square inches. For instance the filtrate volume using a 3.55 square inches (0.0023 m²) filter area is doubled to provide the corrected result. Generally, the filtration behaviour of the wellbore fluid in the HTHP test is determined with a pressure differential across the filter paper of 500 psi (3.45 x 10⁶ Pa). Suitably, the temperature at which the HTHP fluid loss test is carried out may be varied to correspond to the downhole temperature. Generally, the test temperature is in the range 50 to 150°C. A filter-cake is allowed to build up on the filter paper for 30 minutes and the volume of filtrate collected during this 30 minute period is then recorded.

The seawater used in all the examples was synthetic seawater approximating to that from the North Sea of about 3.5% by weight total dissolved salts. It was prepared using the Seawater Corrosion Test Mixture kit (Product No. 331533P) conforming to DEF1053/B.S.3900/B.S.2011, available from VWR International Ltd., Poole, Dorset, UK.

The following polymeric emulsifiers were tested:-Sulfonated derivatives of PA-18, HV Commercial Grade, an alternating copolymer of 1-octadecene and maleic anhydride having a number average molecular weight of 40,000 - 50,000 available from Chevron Phillips Chemical Company LLC, were prepared. Two levels of sulfonate incorporation were achieved by adding increasing quantities of a hot 70% w/w aqueous solution of the sodium salt of taurine to non-aqueous solutions of PA-18 in a stirred reactor held at 120°C under 100 psi nitrogen for 22 hours. After solvent evaporation and grinding, the polyanhydride derivatives (PADs) were analysed for residual taurine by High Performance Liquid Chromatography Mass Spectrometry (HPLC/MS). By difference this allows the percentage of the anhydride rings reacted with a molecule of taurine to be calculated. This is on the basis that if a molecule of taurine were added to every maleic anhydride ring in the polymer this would equate to 100% conversion. (Theoretically a second molecule of taurine can condense with the second carboxylic acid after ring-opening, but this reaction does not proceed easily under the reaction conditions used).

| | Product I.D. | % taurine incorporation |
|---|---|---|
| 1 | PA-18, HV Commercial Grade | 0 |
| 2 | PAD 1462-53 | 35 |
| 3 | PAD 1462-71 | 86 |

### Product 1 was tested as a comparative, non-sulfonated polymer example.

### Emulsifier Evaluation Method.

Using the polymeric emulsifier samples listed above, simple brine and oil emulsions were prepared using 96g Clairsol 370 (Trade Mark) mineral oil (a product of Petrochem Carless Ltd) and 120g of one of three different types of dense (specific gravity = 1.5) brine. The polymeric emulsifier was added at a dose of 8g. The emulsions were prepared using a Silverson L4RT (Trade Mark) mixer fitted with an "Emulsor" head at 5,700 rpm for 30 minutes. The emulsions were then tested for their nature (water-in-oil, w/o, or oil-in-water, o/w) by adding a drop to some oil in a beaker and another drop to some water in a beaker. W/O emulsions readily disperse in oil, not in water, and o/w emulsions vice versa. The Electrical Stability (ES) of the emulsions was also tested. O/W emulsions have an ES (within small error limits) of zero.

O/W emulsions or coarse dispersions or emulsions that separated rapidly were discarded at this stage.

The w/o emulsions were then hot rolled at 93°C for 16 hours and re-tested for their o/w or w/o character, Electrical Stability (ES), and rheological properties. The appearance of the emulsions, as evidenced by the visual assessment of droplet size (whiteness - white emulsions indicate fine droplet size, semi-translucent emulsions indicate coarse droplet size) and tendency to separate, was noted as good, medium, or poor.

The emulsions were then tested for their ability to "flip" to an o/w emulsion or to separate when the emulsion is mixed with low salinity water. This consisted of pouring 10ml of the emulsion into 90ml of seawater in a measuring cylinder, closing the cylinder with a stopper and vigorously shaking by hand for 10 seconds. Under these conditions w/o emulsions prepared with conventional OBM emulsifiers will not disperse in the seawater or flip to an o/w emulsion. Rather they will form viscous blobs material that tend to stick to the walls of the measuring cylinder. The desired effect is a rapid inversion of the w/o emulsion to o/w or a rapid separation of the phases, without the formation of any transient high viscosity material.

Formulations for the dense brines (specific gravity = 1.5) used:

**Sodium bromide brine (per 350 ml)**

| component | Weight (g) |
|---|---|
| Deionised water | 288.8 |
| Sodium bromide (99%) | 236.3 |

**Potassium formate brine (per 350 ml)**

| component | Weight (g) |
|---|---|
| Deionised water | 43.0 |
| Potassium formate liquor (75%w/w) (Petrocare PF 75 ex Hydro) | 482.0 |

**Calcium chloride / calcium bromide brine (per 350 ml)**

| component | Weight (g) |
|---|---|
| Deionised water | 221.7 |
| Calcium chloride dihydrate (75.5%) | 223.9 |
| calcium bromide dihydrate (79.7%) | 79.7 |

### EXAMPLE 1. PA-18, HV Commercial Grade (comparative example)

Emulsions were prepared as above using the non-sulfonated polymer and the three dense brines. In each case very viscous coarse dispersions were obtained that did not disperse in oil, but did in water. The Electrical Stability (ES) in each case was measured at 2 volts. This is essentially zero volts within instrument errors. The non-sulfonated polymer failed to produce the desired w/o emulsion type and the test was discontinued.

### EXAMPLE 2. PAD 1462-53, 35 mole% taurine incorporation.

Emulsions prepared using this partially sulfonated polymer had properties as detailed in the following table.

| Brine type | Emulsion type | visual | ES v. | Plastic Viscosity cP | Yield Point lb/100ft² (Pa) | "Flip" Test in seawater |
|---|---|---|---|---|---|---|
| NaBr | w/o | medium | 28 | 17 | 1 (0.5) | good |
| CaCl₂/ CaBr₂ | w/o | poor | 36 | 18 | -1 (-0.5) | failed |
| Pot. formate | o/w | poor | 2 | Not done | Not done | Not done |

The results suggest that the 35% level of sulfonate incorporation may be insufficient for stabilising w/o emulsions with brines having such a high ionicity.

### EXAMPLE 3. PAD 1462-71, 86 mole% taurine incorporation.

Emulsions prepared using this more highly sulfonated polymer had properties as detailed in the following table.

| Brine type | Emulsion type | visual | ES v. | Plastic Viscosity cP | Yield Point lb/100ft² | "Flip" Test in seawater |
|---|---|---|---|---|---|---|
| NaBr | w/o | good | 63 | 30 | 18 | good |
| CaCl₂ / CaBr₂ | w/o | good | 89 | 22 | 15 | good |
| Pot. formate | w/o | good | 83 | 41 | 17 | good |

The emulsions using this PAD (86% taurine incorporation) are much better quality w/o emulsions, confirming that high sulfonate levels are beneficial in the polymer when required to function with brines having high ionic strength. The other benefit of high taurine incorporation is that it favours the inversion (flip) of the emulsion when diluted with low salinity water such as seawater.

## Claims

1. A method of carrying out a wellbore operation, which includes the steps of:
(a) introducing into a wellbore a wellbore fluid in the form of a water-in-oil emulsion comprising a dispersed brine phase and comprising as an emulsifier at least one polymer which contains both hydrophilic units and hydrophobic units, at least some of said hydrophilic units containing sulfonate groups, and less than 50% by weight of said hydrophilic units comprising -CH₂.CH₂.O- units; and at least some of said hydrophobic units containing pendant alkyl groups having at least 8 carbon atoms;
(b) allowing a filter-cake to form; and subsequently
(c) bringing an aqueous-based fluid into contact with the filter-cake, said aqueous-based fluid having a level of salinity which is lower than the level of salinity of said dispersed brine phase in said wellbore fluid.

2. A method as claimed in claim 1, in which said polymer has a number average molecular weight in the range of from 2,000 to 100,000.

3. A method as claimed in either claim 1 or claim 2, in which the combined molecular weight of said pendant alkyl groups in said polymer is in the range of from 15 to 70% by weight based on the weight of said polymer.

4. A method as claimed in any one of the preceding claims, in which said polymer is a homopolymer of a higher alcohol mono-ester of maleic acid of general formula HO(O)CCH=CHC(O)OR where R is a C₈ to C₄₀ alkyl group, into which sulfonate groups have been introduced.

5. A method as claimed in any one of the preceding claims, in which said polymer contains units derived from at least one hydrophilic monomer selected from acrylic acid, methacrylic acid, hydroxyethylmethacrylate, hydroxypropylmethacrylate, maleic acid, maleic anhydride, fumaric acid, itaconic acid, acrylamide, N,N-dimethylacrylamide, N-vinyl pyrrolidone, 2-acrylamido-2-methylpropane sulfonic acid, vinylsulfonic acid, styrenesulfonic acid, sodium allyl sulfonate, sodium methallyl sulfonate, 2-acrylamidoethane sulfonic acid, 2-acrylamidopropane sulfonic acid, 3-methacrylamidopropane sulfonic acid, and vinylbenzyl sulfonic acid.

6. A method as claimed in any one of the preceding claims, in which sulfonate groups have been introduced into said polymer by first preparing a polymer containing carboxylic acid and/or anhydride groups and then reacting at least a portion of said carboxylic acid and/or anhydride groups with a compound of general formula R¹₂N(CH₂)ₙSO₃X (I) or a compound of general formula HO(CH₂)ₙSO₃X (II) wherein each R¹ is independently selected from hydrogen, methyl or ethyl, X is H, ammonium, or a Group IA metal, and n is an integer of from 1 to 6.

7. A method as claimed in claim 6, in which said compound of formula I or II is taurine, N-methyl taurine, isethionic acid, or a salt thereof.

8. A method as claimed in any one of claims 1 to 5, in which sulfonate groups have been introduced into said polymer by sulfoethylation via the Michael reaction of vinylsulfonic acid with any hydroxyl or amino groups present on the polymer; by sulfomethylation via the reaction of formaldehyde and a sulfite salt with amino groups or phenolic rings that may be present in the polymer; or by direct sulfonation of an aromatic or unsaturated group using sulfur trioxide, an acyl sulfate, or chlorosulfonic acid.

9. A method as claimed in any one of the preceding claims, in which at least a portion of said pendant alkyl groups in said polymer have been introduced into said polymer by grafting onto a portion of the carboxylic acid groups of a carboxylated vinylic polymer via an amide or an ester linkage.

10. A method as claimed in any one of the preceding claims, in which said polymer is a copolymer derived from a hydrophobic monomer selected from C₁₀ to C₄₀ alpha-olefins; alkyl vinyl ethers; acrylates of the general formula CH₂=CHR⁷C(O)OR⁸ (IV) where R⁷ is H or methyl and R⁸ is a C₈ to C₄₀ alkyl group; and acrylamides of the general formula CH₂=CHR⁵C(O)NHR⁶ (III) where R⁵ is selected from the group consisting of H and C₁ to C₄ alkyl groups and R⁶ is a C₈ to C₄₀ alkyl group.

11. A method as claimed in any one of claims 1 to 3, in which said polymer is copolymer of an alkyl vinyl ether with an unsaturated anhydride in which optionally a portion of the anhydride groups in the copolymer have been grafted with an alkanol or alkylamine having an alkyl group containing at least 8 carbon atoms, and in which at least a portion of the anhydride groups have been converted into sulfonate-containing groups; or is a copolymer of an unsaturated anhydride and/or unsaturated carboxylic acid with at least one alpha-olefin, into which sulfonate groups have been introduced.

12. A method as claimed in any one of claims 1 to 3, in which said polymer is a derivative of a copolymer of maleic anhydride and a C₁₂-C₃₀ alpha olefin, into which sulfonate groups have been introduced.

13. A method as claimed in claim 12, in which said polymer is a copolymer of maleic anhydride and 1-dodecene; 1-tetradecene; 1-hexadecene; 1-octacecene; 1-eicosene; 1-docosene; or a C₂₄-C₂₈ alpha-olefin; into which sulfonate groups have been introduced.

14. A method as claimed in any one of the preceding claims, in which step (a) comprises drilling a well; once drilling is completed and a filter-cake has formed according to step (b), the drilling fluid is displaced by a completion fluid having at least a similar level of salinity to that of the dispersed brine phase of the drilling fluid; finishing hardware is installed; and subsequently step (c) is carried out.

15. A method as claimed in any one of the preceding claims, in which said dispersed brine phase of step (a) is a synthetic brine containing at least 15% by weight of dissolved salts.

16. A method as claimed in claim 15, in which said synthetic brine contains at least 25% by weight of dissolved salts.

17. A method as claimed in any one of the preceding claims, in which said dispersed brine phase of step (a) is present in an amount of from 1 to 70% by volume based on the total volume of the brine and oil phases.

18. A method as claimed in any one of the preceding claims, in which the aqueous-based fluid used in step (c) contains less than 6% by weight of dissolved salts.

19. A method as claimed in any one of the preceding claims, in which the aqueous-based fluid used in step (c) is seawater.

20. A method as claimed in any one of claims 1 to 18, in which the aqueous-based fluid used in step (c) is injected water or produced water.

21. A wellbore fluid in the form of a water-in-oil emulsion comprising a dispersed brine phase and comprising as an emulsifier at least one polymer which contains both hydrophilic units and hydrophobic units, at least some of said hydrophilic units containing sulfonate groups, and less than 50% by weight of said hydrophilic units comprising - CH₂.CH₂.O- units; and at least some of said hydrophobic units containing pendant alkyl groups having at least 8 carbon atoms, at least some of said pendant alkyl groups being attached to carbon atoms of the polymer backbone via a linking group selected from a carbon-carbon bond; a carbon-oxygen-carbon ether bond; or a carbon-oxygen-carbon ester bond.

22. A wellbore fluid as claimed in claim 21, in which said polymer is as defined in any one of claims 2 to 13.

23. A wellbore fluid in the form of a water-in-oil emulsion comprising a dispersed brine phase containing at least 25% by weight of dissolved salts and comprising as an emulsifier at least one polymer which contains both hydrophilic units and hydrophobic units, at least some of said hydrophilic units containing sulfonate groups, and less than 50% by weight of said hydrophilic units comprising -CH₂.CH₂.O- units; and at least some of said hydrophobic units containing pendant alkyl groups having at least 8 carbon atoms.
